# EUROPEAN PATENT SPECIFICATION

(11) **EP 3 695 136 B1**
(45) Date of publication and mention of the grant of the patent: **07.06.2023**
(21) Application number: 18785325.4
(22) Date of filing: 08.10.2018
(51) Int. Cl.: F16F 7/116

(54) **LOW-FREQUENCY AND WIDE BANDGAP VIBRATION-INSULATING MODULE DEVICE AND RELATIVE PERIODIC STRUCTURE**
NIEDERFREQUENZ UND BREITE BANDLÜCKE SCHWINGUNGSISOLIERENDE MODULEINRICHTUNG UND RELATIV PERIODISCHE STRUKTURE
MODULE D'ISOLATION DE VIBRATION BASSE FRÉQUENCE ET À LARGE BANDE ET STRUCTURE PERIODIQUE RELATIVE

(30) Priority: 09.10.2017 IT 201700113264
(43) Date of publication of application: 19.08.2020
(73) Proprietor: Phononic Vibes S.r.l., 20158 Milano (IT)
(72) Inventor: D'ALESSANDRO, Luca, 66100 Chieti (IT); BELLONI, Edoardo, 19123 La Spezia (IT); ARDITO, Raffaele, 20154 Milano (IT); BRAGHIN, Francesco, 21100 Varese (IT); CORIGLIANO, Alberto, 20159 Milano (IT)
(74) Representative: Ferreccio, Rinaldo
(86) International application number: PCT/EP2018/077281
(87) International publication number: WO 2019/072746

(56) References cited:
- EP-A2- 0 150 373
- EP-A2- 0 651 371
- WO-A1-2015/128699
- CN-A- 106 228 969
- DE-T2- 60 107 891
- US-A1- 2003 057 623
- US-A1- 2007 051 576
- US-A1- 2008 197 549
- US-A1- 2011 020 592
- US-B1- 6 433 931
- US-B2- 8 833 510
- ZHANG X ET AL: "Elastic wave band gaps for three-dimensional phononic crystals with two structural units", PHYSICS LETTER, NORTH-HOLLAND PUBLISHING CO., AMSTERDAM, NL, vol. 313, no. 5-6, 14 July 2003 (2003-07-14), pages 455-460, XP004434758, ISSN: 0375-9601, DOI: 10.1016/S0375-9601(03)00807-7

## Description

### Technical field

The present invention relates to a vibration-insulating module device and to a relative vibration-insulating periodic structure.

In general, the present invention finds its application in the field of vibration damping and in the field of propagation control of mechanical and acoustic waves and vibrations.

### Background art

There are devices configured for limiting the propagation of vibrations generated by machinery and plants, which act as insulation for the neighbouring areas. The term machinery may be understood in a non-limiting manner: industrial machines of all types and size (turbines, wind turbines, etc.), trains of all types and size, work tools on site.

The prior art comprises some solutions for vibration insulation, which relate to bidimensional periodic structures, such as for instance those described by documents: US8833510B2 entitled *"Photonic* metamaterials *for vibration isolation and focusing of elastic waves";* US8054145B2 entitled *"Photonic crystal wave structure";* CN103514873A entitled *"Low-frequency vibrationisolation combined sandwiched structure".*

The prior art then comprises solutions for vibration insulation, which relate to three-dimensional periodic structures.

An example is provided by document CN106228969A entitled *"Three-dimensional locally-resonant photonic crystal structure and preparation",* which relates to a periodic structure capable of modifying the propagation of elastic waves with wide bandgap absorption even for vibrations in the 3D field. Document CN106228969A provides unit-cell modules connected to each other by cylindrical connections, wherein each module comprises two concentric spheres, all made of three materials, one of which has an adequately low stiffness, or soft material.

However, the solution suggested by CN106228969A turns out to be inadequate for high-load situations encountered in industrial settings, due to the materials used (among which, materials with modest elastic module). A further example is provided by the publication *"*Modelling and experimental verification of an ultra-wide bandgap in 3D photonic crystal"; D'Alessandro, L.; Belloni, E.; Ardito, R.; Corigliano, A.; Braghin, F.; Applied Physics Letters, Volume 109, Issue 22, id.221907 (11/2016), which relates to a three-dimensional photonic crystal, made of a single material and capable of insulating wide bandgap and high-frequency vibrations (4.0-19.0 kHz).

However, the solution suggested by the above-mentioned publication results to be inadequate for industrial uses, due to the size constraints of the module and frequency bandgap, which are not of interest in the case of vibrations generated by machinery and plants.

The prior art solutions, though based on repetitions in the three dimensions of vibration-insulating module devices, do not ensure insulation for each direction of the incident wave/vibration, which is robust in the preferred frequency range between 0-1000 Hz for civil and industrial applications, or in the preferred frequency range between 10-4000 Hz for acoustic insulation applications.

### Summary of the invention

An object of the present invention is to overcome the prior art drawbacks.

A particular object of the present invention is to provide an insulating device for mechanical or acoustic vibrations or waves that is effective in a wide bandgap of frequencies, in particular up to 1000 or 4000 Hz.

A further particular object of the present invention is to provide a device that allows controlling the propagation of both elastic and acoustic vibrations, providing a three-dimensional insulation.

A further particular object of the present invention is to provide a device of reduced dimensions, with a dimension typical of the module up to about 1 m for mechanical vibrations and up to about 10 cm or 20 cm for acoustic vibrations.

A further particular object of the present invention is to provide a device that can be made of materials commonly used in the civil engineering and mechanical engineering fields.

These and other objects are attained by a vibration-insulating module device and a relative periodic structure, according to the features of the enclosed claims, which form an integral part of the present disclosure.

The present invention provides a vibration-insulating module device comprising: six mass elements respectively adjacent and not directly joined with each other; at least three stiffness elements interconnected with each other; the six mass elements comprise respective at least six anchor elements, each one of said anchor elements being configured for mechanically connecting each one of said mass elements with respective portions of two of said stiffness elements.

The module device of the present invention thus allows realizing an effective structure for insulating wide bandgap mechanical or acoustic vibrations or waves, in particular having a cut-off frequency in the low frequencies, up to 1000 Hz or 4000 Hz.

Advantageously, said module device may be employed in a periodic structure for insulating vibrations generated by machinery and plants, traffic on infrastructures, construction sites and noise sources in general; the modular repetition of the device may be selected based on the application, providing a three-dimensional insulation.

Advantageously, the module device according to the present invention can be made of materials of common use in the civil engineering and mechanical engineering fields, such as steel and concrete. In this sense, the module device according to the present invention is suitable for supporting loads and stresses encountered in the industrial field.

Alternatively, the module device according to the present invention can be made of other materials of common use and suitable for the specific application of mechanical or acoustic vibration insulation.

The module device according to the invention may be thus easily and economically constructed and represents a very valid alternative to known insulating devices, as well as more effective.

Preferably, each one of the stiffness elements develops along a respective substantially annular closed trajectory. Preferably, the stiffness elements are laying on three respective planes orthogonal to each other. Furthermore, preferably, the stiffness elements are interconnected with each other so as to define a cage structure.

According to the invention, the mass elements comprise respective channels for the passage therein of the stiffness elements. The anchor elements thus occupy a limited portion of the channels, and in this way the mass of the mass elements is maximized and meanwhile the stiffness of the stiffness elements is minimized.

Advantageously, a module device according to the present invention has optimal characteristics in insulating wide bandgap vibrations, while having reduced dimensions from few centimeters up to about one meter.

Further features and advantages will become more apparent from the following detailed description of preferred, but not exclusive, embodiments of the present invention and from the dependent claims that outline preferred and particularly advantageous embodiments of the invention.

### Brief description of the drawings

The invention is illustrated with reference to the following figures, provided by way of non-limiting example, in which:
- Figure 1 shows a first embodiment of a vibration-insulating module device according to the present invention.
- Figure 2 shows a view of the module device of Figure 1 partially disassembled.
- Figure 3 shows the stiffness elements of the module device of Figure 1.
- Figure 4 shows a first embodiment of the anchor elements of a vibration-insulating module device according to the present invention.
- Figure 5 shows a second embodiment of the anchor elements of a vibration-insulating module device according to the present invention.
- Figure 6 shows a second embodiment of a vibration-insulating module device according to the present invention.
- Figure 7 shows a view of the module device of Figure 6 partially disassembled.
- Figure 8 shows the stiffness elements of the module device of Figure 6.
- Figure 9 shows a third embodiment of a vibration-insulating module device according to the present invention.
- Figure 10 shows a view of the module device of Figure 9 partially disassembled.
- Figure 11 shows a fourth embodiment of a vibration-insulating module device according to the present invention.
- Figure 12 shows a view of the module device of Figure 11 partially disassembled.
- Figure 13 shows a fifth embodiment of a vibration-insulating module device according to the present invention.
- Figure 14 shows a view of the module device of Figure 11 partially disassembled.
- Figure 15 shows an exemplary embodiment of an insulating periodic structure according to the present invention.

In the different figures, analogous elements will be indicated with analogous reference numbers.

### Detailed description

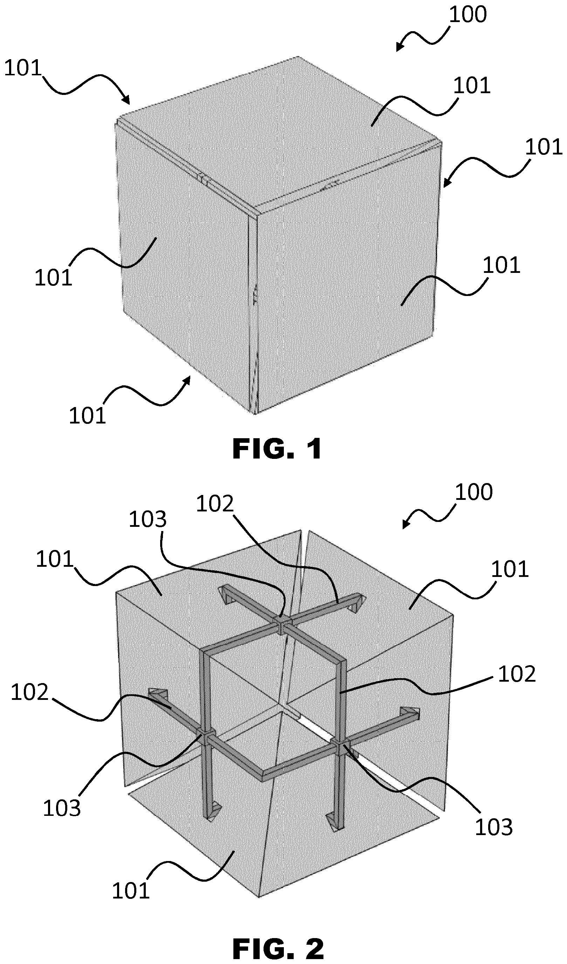

Figure 1 illustrates a first embodiment of a vibration-insulating module device 100.

Said module device 100 comprises six mass elements 101 adjacent to each other. The six mass elements 101 define a substantially cubic structure, since they have six respective plane faces facing towards the outside of the module device 100.

The module device 100, as it will be further described, is capable of insulating wide bandgap and in particular low-frequency mechanical and acoustic vibrations, for instance between 0 Hz and 1000 Hz or between 10 Hz and 4000 Hz.

In particular, the module device 100 is insertable into a relative insulating periodic structure which comprises a plurality of module devices contiguously juxtaposed to each other at their external interface defined by the outer plane faces of the six mass elements 101.

An advantage of the present invention is that the insulating periodic structure is made of any number of module devices, which will be described in greater detail.

The module device 100 preferably has dimensions which vary from few centimeters up to about 1 m, depending on the desired insulating performance. Therefore, the module device has relatively reduced dimensions and is capable of contributing to a periodic structure for the insulation, in particular of low frequency and wide bandgap vibrations, which propagate in a three-dimensional way.

The mass elements 101 can be made of materials typically used in civil and mechanical engineering, such as for instance metals, alloys, wood, concrete, plastics, rubbers or the like.

In an alternative embodiment, the mass elements could advantageously define a parallelepipedal structure, instead of cubic, anyway easily juxtaposable, so as to define a periodic structure.

Figure 2 shows a view of the module device 100, partially disassembled, from which three of the six mass elements 101 have been removed so as to make the interior thereof visible.

First of all, the presence of interspaces between the mass elements 101, which turn out not be joined to each other, can be noted. "Adjacent and not joined" means that the mass elements are juxtaposed and close to each other but are not made in one piece and there is discontinuity of material between mass elements adjacent to each other.

In this embodiment, the mass elements 101 are substantially pyramidalshaped.

In general, the mass elements may preferably have a substantially pyramidal or truncated-pyramidal shape, so that the bases of the same substantially define the outer faces of the module device 100, while each mass element develops towards the interior of the device, juxtaposing to the adjacent elements, thus forming a compact structure.

In general, it is advantageous that the mass elements occupy as much space as possible inside the module device, without overlapping or touching each other. It is thus possible to use other geometries for the masses, which respect such features.

Preferably, the mass elements are equal to each other, to simplify the industrial production and assembly of the device 100, among other things.

The structure of the module device 100 is made by the presence of three stiffness elements 102 interconnected with each other, laying inside the module device 100.

The stiffness elements 102 are adapted to ensure structural cohesion to the mass elements. Preferably, for insulating applications of mechanical vibrations, the stiffness elements are made of metallic material, in order to ensure good insulating properties from vibrations, and meanwhile the chance to withstand even high loads.

The module device 100 further comprises six anchor elements 103, only three of which are visible in Figure 2.

Said six anchor elements 103 are respectively comprised in the six mass elements 101, for connecting them to the stiffness elements 102 in connection areas. Said six anchor elements 103 will be hereinafter described in greater detail.

The stiffness elements 102 are characterized by elongated elements which develop on respective substantially annular closed trajectories. The embodiment of the stiffness elements 102 provides for a squared trajectory, but other configurations (for example circular, elliptical, etc.) could be used. The stiffness elements are at least in a number of three and are laying on three respective planes orthogonal to each other, so as to form a three-dimensional structure, with a preferably cubic symmetry as described.

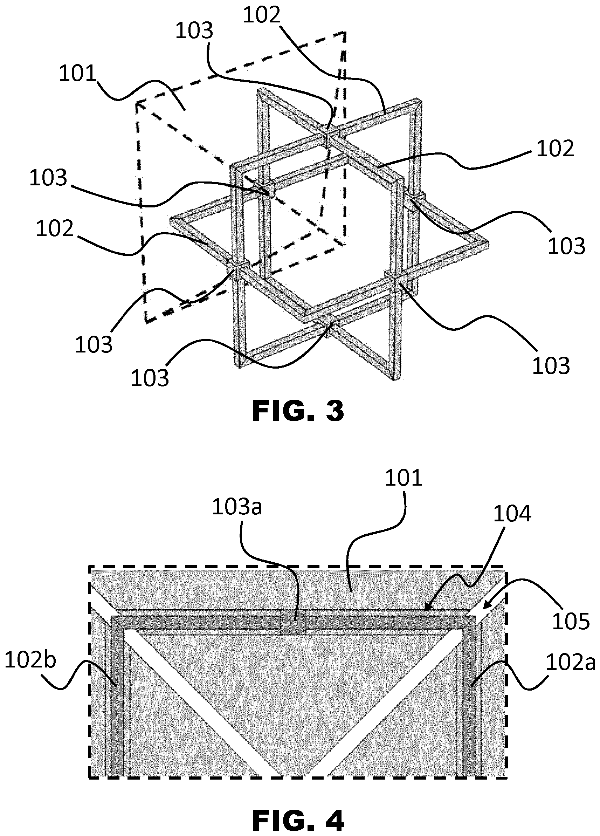

Figure 3 illustrates the stiffness elements 102 and the relative anchor elements 103.

The anchor elements 103 are configured for mechanically connecting each one of the mass elements 101 to respective portions of two stiffness elements 102. Said two stiffness elements 102 intersect at the mass element 101, along orthogonal directions, as it is possible to visualize inside the mass elements 101 dashed in Figure 3.

Each stiffness element 102 develops along a substantially annular closed trajectory. By means of the anchor elements 103, each stiffness element 102 thus turns out to be connected to four mass elements 101, which are in particular lying along a plane common to the stiffness element 102.

To this aim, on each stiffness element 102 there are four anchor elements 103. The stiffness elements 102 are interconnected with each other, so as to define a cage structure, as it is well visible in Figure 3.

In general, the mass elements 101, the stiffness elements 102 and the anchor elements 103 are lying according to three symmetry planes (in particular, a preferably cubic symmetry) inside the module device 100.

The three-dimensionality of the structure of the module device 100 allows damping vibrations in the three-dimensional field, with better performances in vibration insulation.

In particular, the module device comprises masses that are lying along the main propagation directions of vibrations, preferably using masses and stiffnesses equal to each other.

The mutual constraint between the mass elements by the stiffness elements connected to the anchor elements contributes in making a device which is compact and effective in insulating vibrations.

Figure 4 shows in greater detail a first embodiment of the anchor elements 103a of a vibration-insulating module device according to the present invention.

The mass element 101 comprises a respective channel 104, for the passage therein of the stiffness element 102, schematized in Figure 4 as comprising two portions 102a and 102b. Furthermore, it is possible to visualize the interspace 105 between the mass elements 101, as already described.

Inside the channel 104 there is the anchor element 103a, which occupies a limited portion thereof. In this way, the mass of the mass elements is maximized, and the stiffness of the stiffness elements is minimized, to the advantage of an optimization of the frequency response features.

In other words, the anchor element 103a occupies a portion of the channel 104, in particular occupying a central position thereof, preferably close to the outer face of the mass elements. In this way the total dimension of the cage constituted by the stiffness elements is maximized, thus improving the performances of the device.

In particular, the module device 100 allows the elastic element 102 to flex and twist about the constraint of the anchor element 103a. Preferably, said constraint of the anchor element 103a consists of a fixed joint. Said stresses occur by means of the action of the mass elements, set in motion by the vibrations acting on the module device 100.

In the embodiment of the anchor element 103a, it preferably consists of a fixed joint made in one piece, between the stiffness element 102 and the mass element 101.

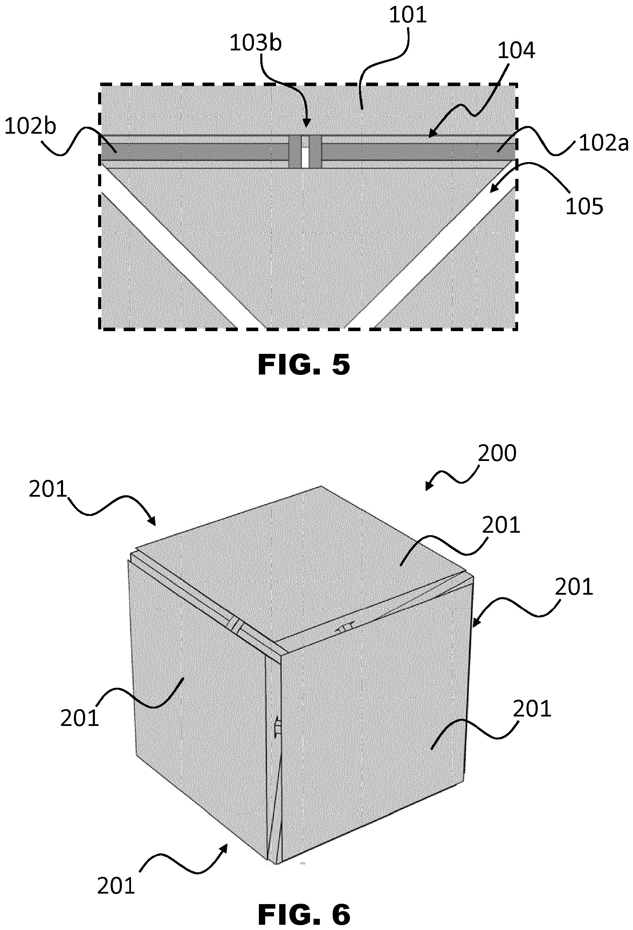

Figure 5 illustrates a second embodiment of the anchor element 103b of a vibration-insulating module device according to the present invention.

The variant of the anchor element 103b, with respect to the anchor element 103a, provides for a fixed joint made in two pieces, between the stiffness element 102 and the mass element 101, with the structural continuity ensured by the mass element 101 itself.

The specific features of the anchor elements may be defined as project variables, based on the materials used and on the desired frequency response.

It is possible, if necessary, to insert further constraint elements between the anchor elements and the mass elements. Preferably, where possible, the anchor elements are made of the same material as the stiffness elements.

In the following alternative embodiments of the module device, where not differently indicated in explicit manner, the features already described with reference to the embodiment of the module device 100 are applicable.

Figure 6 illustrates a second embodiment of a vibration-insulating module device 200 according to the present invention.

The six mass elements 201, respectively adjacent and not joined, define a module structure, with cubic symmetry according to what has already been described.

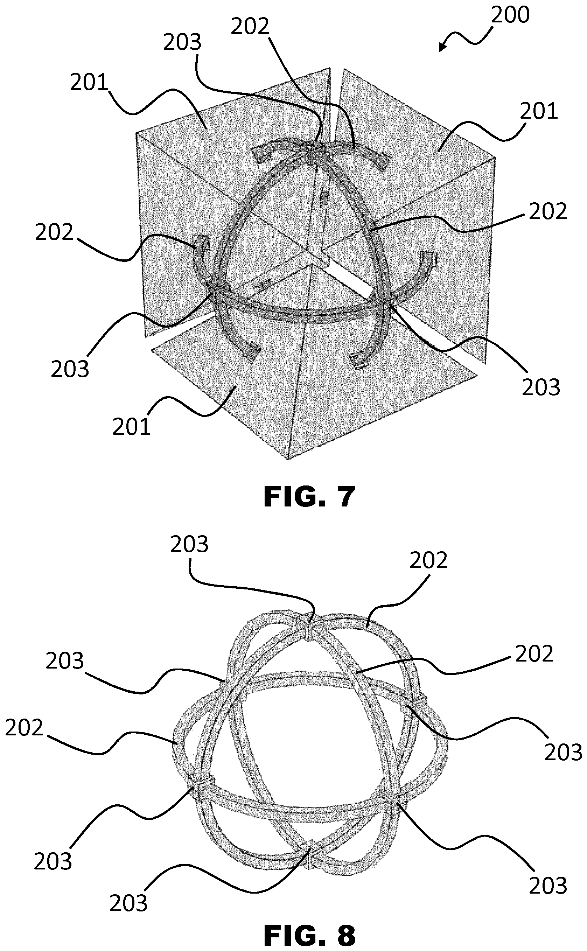

Figure 7 illustrates a view of the module device 200 partially disassembled, from which three of the six mass elements 201 have been removed, so as to make the interior thereof visible.

The three stiffness elements 202 are interconnected with each other and each one develops along a respective substantially annular closed trajectory, having in particular a circular trend.

Figure 8 illustrates the stiffness elements 202 of the module device 200.

The stiffness elements comprise six anchor elements 203, respectively comprised in the six mass elements 201, in order to mechanically connect each one of the mass elements 201 with respective portions of two stiffness elements 202, which in particular orthogonally intersect inside each respective mass element.

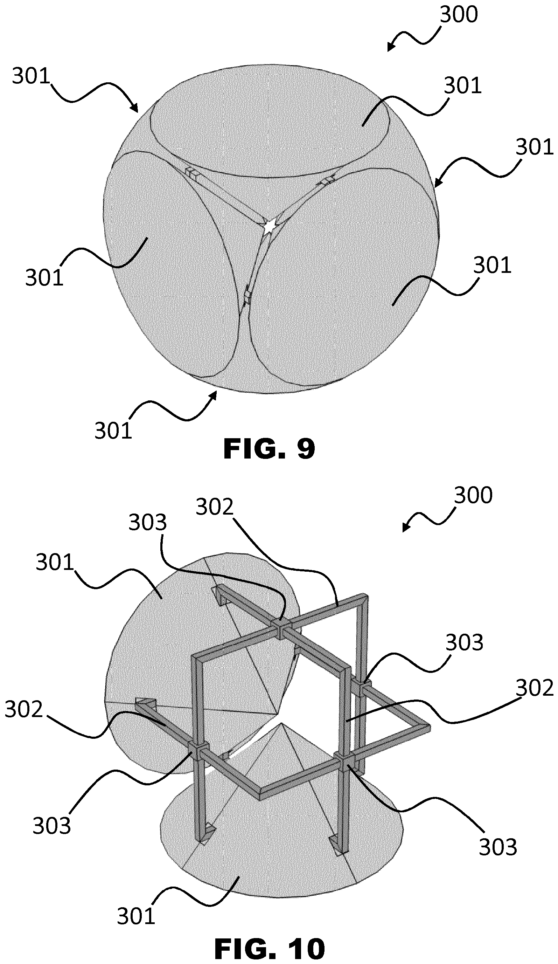

Figure 9 illustrates a third embodiment of a vibration-insulating module device 300 according to the present invention.

The six mass elements 301, respectively adjacent and not joined, define a module structure, with a cubic symmetry according to what has already been described.

Figure 10 illustrates a view of the module device 300 partially disassembled, from which four of the six mass elements 301 have been removed, so as to make the interior thereof visible.

The mass elements 301 have a substantially pyramidal shape with a circular base, or a substantially conical shape with four lateral edges. As already described, advantageously the mass elements 301 occupy the most possible space inside the module device 300, without overlapping or touching each other.

The three stiffness elements 302 are interconnected with each other and each one develops along a respective substantially annular closed trajectory, since they have a particularly squared trend.

The stiffness elements comprise six anchor elements 303, respectively comprised in the six mass elements 301, for mechanically connecting each one of the mass elements 301 with respective portions of two stiffness elements 302, which in particular intersect orthogonally inside each respective mass elements.

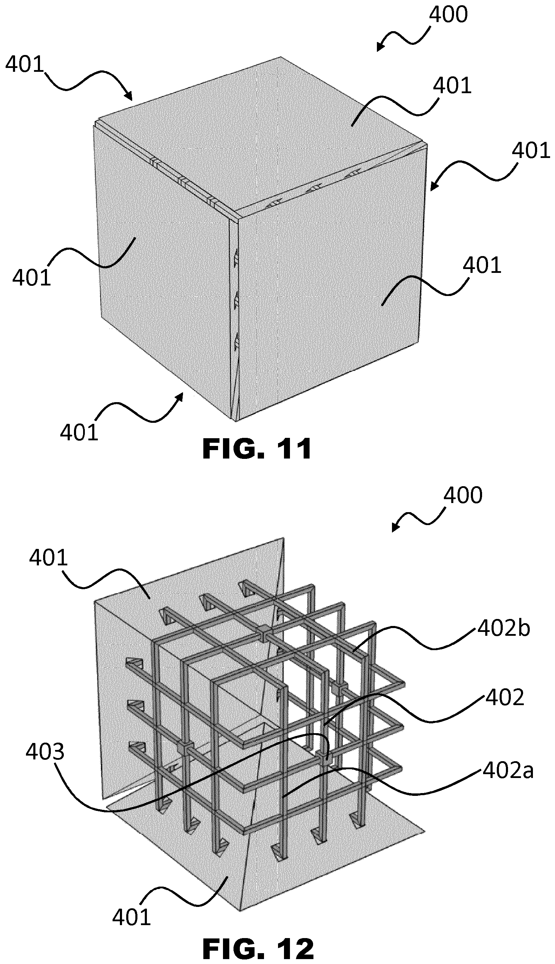

Figure 11 illustrates a fourth embodiment of a vibration-insulating module device 400 according to the present invention.

The six mass elements 401, respectively adjacent and not joined, define a module structure, with a cubic symmetry according to what has already been described.

Figure 12 illustrates a view of the module device 400 partially disassembled, from which four of the six mass elements 401 have been removed in order to make the interior thereof visible 401.

The mass elements 401 have a substantially pyramidal shape.

Each one of the stiffness elements 402 comprises two further stiffness elements 402a and 402b, indicated for only one element in Figure 12 for greater clarity.

Said stiffness elements 402, 402a, 402b realize an element of equal stiffness, since they are interconnected with each other so as to form a cage structure.

Each equivalent stiffness element 402, 402a, 402b develops along a respective substantially annular closed trajectory, having in particular a squared trend.

This configuration of the stiffness elements 402, 402a, 402b gives the device structure 400 a greater elastic stiffness, which is advantageous for some applications.

Analogously to what has already been described, the stiffness elements comprise six anchor elements 403, respectively comprised in the six mass elements 401, for mechanically connecting each of the mass elements 401 with respective portions of two stiffness elements 402.

Additionally, in a variant not represented, it would be possible to insert a greater number of anchor elements, one or more for each stiffness element, reaching a total number of 54 (9 anchor elements for the 6 mass elements) or even more anchor elements. Said anchor elements could correspond to anchor elements which are "equivalent" to the preferred embodiments.

The preferred embodiment provides for the presence of six anchor elements, one for each mass element.

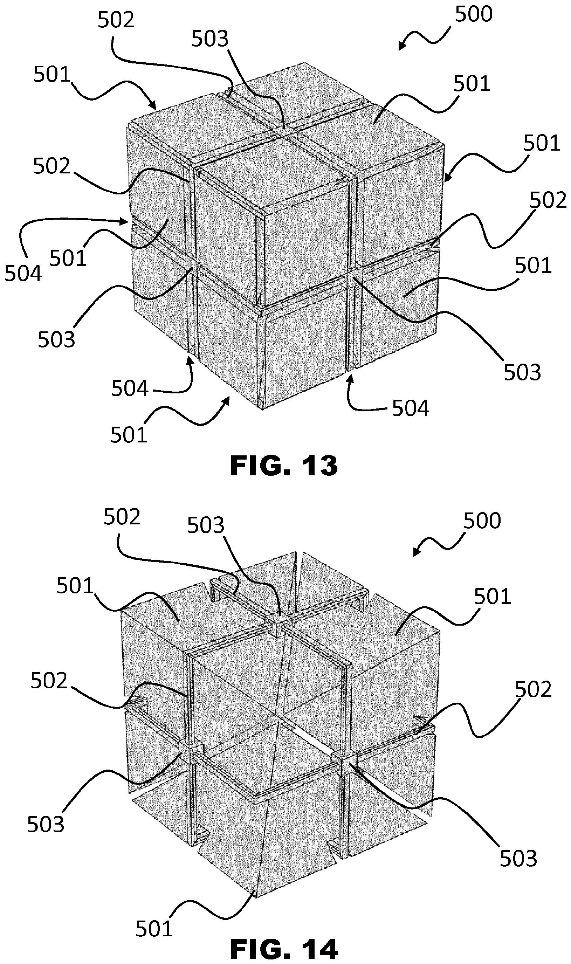

Figure 13 illustrates a fifth embodiment of a vibration-insulating module device 500 according to the present invention.

The six mass elements 501, respectively adjacent and not joined, define a module structure, with a cubic symmetry according to what has already been described.

As already described, the three stiffness elements 502 are interconnected with each other and develop along a respective substantially annular closed trajectory, having in particular a squared trend.

The six mass elements 501 comprise respective six anchor elements 503, for mechanically connecting each one of the mass elements 501 with respective portions of two stiffness elements 502.

In particular, the respective portions of the two stiffness elements 502 intersect orthogonally at an outer surface of each respective mass element 501.

Therefore, in this embodiment, the stiffness elements 502 are partially "external" to the mass elements 501, but advantageously included in the cubic volume that defines the base module; this expedient may simplify the manufacture of the module device according to the present invention, meanwhile leaving the functionality thereof unchanged.

The mass elements 501 comprise respective channels 504, for the passage therein of the stiffness elements 502; inside each channel 504 there is the anchor element 503, which occupies a portion thereof. In any case, in this embodiment the channels 504 turn out to be accessible from the outside of the module device 500, namely with a side open towards the outside of the module device 500.

Figure 14 illustrates a view of the module device 500 partially disassembled, from which three of the six mass elements 501 have been removed in order to make the interior thereof visible.

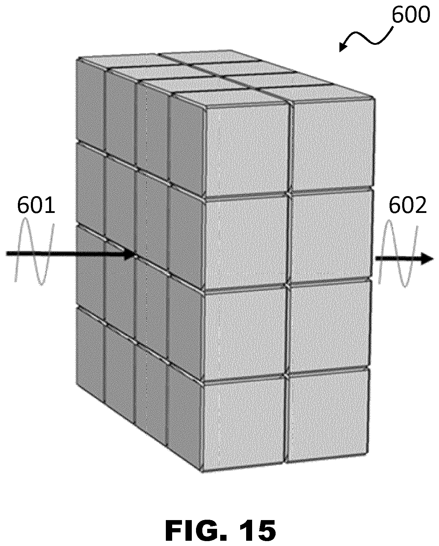

Figure 15 illustrates an exemplary embodiment of an insulating periodic structure 600 according to the present invention.

In particular, the module devices according to the present invention, such as the devices 100, 200, 300, 400 herein described, are insertable into a relative insulating periodic structure 600.

The insulating periodic structure comprises a plurality of module devices contiguously juxtaposed to each other at their external interface defined by the outer plane faces of the six mass elements. In this example, the periodic structure comprises 4x4x2 module devices.

Said periodic structure 600 turns out to be in a three-dimensional structure, of any shape, defined by a plurality of modules juxtaposed to each other. The periodic structure made of a suitable configuration of modules is thus more effective in insulating from the vibrations of a machinery thereto adjacent or close.

The vibrations 601 are insulated from the structure 600, which allows a spectrally reduced fraction 602 of the original vibrations to be filtered, with an attenuation effect.

### Industrial applicability

Advantageously, the present invention allows insulating wide bandgap and low-frequency mechanical or acoustic vibrations or waves.

The module device according to the present invention is optimal in constituting a periodic structure of reduced dimensions and characterized by ultra-wide insulated frequency bandgaps for waves anyway oriented in the space.

The module device according to the present invention can be made of a unique material or more materials, all of common use in mechanical and civil engineering, such as metals, alloys, cement-based conglomerates and wood.

These features give the structure even long-lasting mechanical properties of resistance to loads, which would not be guaranteed by the use of insulating materials such as rubber.

Alternatively, the module device according to the present invention can be made of one or more materials, such as plastic or rubber, in particular for insulating applications of acoustic vibrations or waves.

Among the applications of the present invention, there are: public transport by rail, industrial machinery, the increase in comfort of structures adjacent to subways and tram lines, the risk reduction of malfunctioning of industrial machines adjacent to other vibrating machinery or to railway networks, the reduction of noise pollution, due for instance to vibrations in the ground coming from railway lines, or due to noise sources in general.

Furthermore, the module device according to the present invention may be extremely economical to realize.

Considering the description herein reported, the skilled person will be in the position to conceive further changes and variants, in order to meet contingent and specific needs.

It is clear that, where there are no technical incompatibilities evident to the skilled person, the configurations of specific elements described with reference to some embodiments, can be used in other embodiments herein described.

For instance, it would be possible to use configurations of the mass elements, the stiffness elements or the anchor elements described in a specific embodiment even in combination with mass elements, stiffness elements or anchor elements described with reference to other embodiments.

Therefore, the embodiments herein described are to be intended as non-limiting examples of the invention, which is defined solely by the appended claims.

## Claims

1. Vibration-insulating module device (100; 200; 300; 400; 500) comprising:
six mass elements (101; 201; 301; 401; 501) respectively adjacent and not directly joined with each other;
at least three stiffness elements (102; 202; 302; 402; 502) interconnected with each other;
said six mass elements (101; 201; 301; 401; 501) comprising respective at least six anchor elements (103; 203; 303; 403; 503),
each of said at least six anchor elements (103; 203; 303; 403; 503) being configured for mechanically connecting each one of said mass elements (101; 201; 301; 401; 501) with respective portions of two of said stiffness elements (102; 202; 302; 402; 502);
**characterized in that** said mass elements (101; 201; 301; 401; 501) comprise respective channels (104; 504) for passage therein of said stiffness elements (102; 202; 302; 402; 502), and wherein said anchor elements (103; 203; 303; 403; 503) occupy a portion of said channels (104; 504).

2. Vibration-insulating module device according to claim 1, wherein each one of said stiffness elements (102; 202; 302; 402; 502) develops along a respective substantially annular closed trajectory, each one of said stiffness elements (102; 202; 302; 402; 502) being mechanically connected to four of said mass elements (101; 201; 301; 401; 501), by said anchor elements (103; 203; 303; 403; 503).

3. Vibration-insulating module device according to claim 1 or 2, wherein said stiffness elements (102; 202; 302; 402; 502) are laying on three respective planes orthogonal to each other.

4. Vibration-insulating module device according to any one of claims 1 to 3, wherein said stiffness elements (102; 202; 302; 402; 502) are interconnected with each other so as to define a cage structure.

5. Vibration-insulating module device according to claim 1, wherein mass of said mass elements (101; 201; 301; 401; 501) is maximized and stiffness of said stiffness elements (102; 202; 302; 402; 502) is minimized in said module device (100; 200; 300; 400; 500).

6. Vibration-insulating module device according to claim 1 or 5, wherein said anchor elements (103; 203; 303; 403; 503) are laid in central positions of said respective channels (104, 504).

7. Vibration-insulating module device according to any one of claims 1 to 6, wherein said mass elements (101; 201; 301; 401; 501) define a substantially cubic or parallelepipedal structure (100; 200; 300; 400; 500).

8. Vibration-insulating module device according to any one of claims 1 to 7, wherein said mass elements (101; 201; 301; 401; 501) have a shape which is substantially pyramidal or substantially truncated-pyramidal or substantially conical or substantially truncated-conical, preferably said mass elements (101; 201; 301; 401; 501) being alike.

9. Vibration-insulating module device according to any one of claims 1 to 8, wherein said mass elements (101; 201; 301; 401; 501), said stiffness elements (102; 202; 302; 402; 502) and said anchor elements (103; 203; 303; 403; 503) are laid according to three symmetry planes within said module device.

10. Vibration-insulating module device according to any one of claims 1 to 9, wherein said anchor elements (103; 203; 303; 403; 503) are configured for mainly bend-stressing, and preferably also torsion-stressing, said stiffness elements (102; 202; 302; 402; 502) under the action of said mass elements (101; 201; 301; 401; 501).

11. Vibration-insulating module device according to any one of claims 1 to 10, said module device (100; 200; 300; 400; 500) being configured for insulation of mechanical vibrations in the range from 0 Hz to 1000 Hz, or for insulation of acoustic vibrations in the range from 10 Hz to 4000 Hz.

12. Vibration-insulating module device according to any one of claims 1 to 11, wherein said six mass elements (101; 201; 301; 401; 501) are juxtaposed and close to each other, and there is at least partial discontinuity of material between respective mass elements (101; 201; 301; 401; 501) adjacent to each other.

13. Vibration-insulating module device according to any one of claims 1 to 12, wherein each of said at least six anchor elements (103; 203; 303; 403; 503) consists of a fixed joint (103a, 103b) made in one piece or two pieces, between one of said at least three stiffness elements (102; 202; 302; 402; 502) and one of said six mass elements (101; 201; 301; 401; 501), wherein structural continuity of each one of said at least three stiffness elements (102; 202; 302; 402; 502) is ensured by said fixed joint (103a, 103b).

14. Vibration-insulating periodic structure (600), comprising a plurality of vibration-insulating module devices contiguously juxtaposed to each other at their external interface, so as to define a three-dimensional structure, **characterized in that** at least one vibration-insulating module device (100; 200; 300; 400; 500) is according to any one of claims 1 to 13.

## Patentansprüche

1. Schwingungsisolierende Moduleinrichtung (100; 200; 300; 400; 500) mit sechs Massenelementen (101; 201; 301; 401; 501), die jeweils zueinander benachbart und nicht direkt miteinander verbunden sind,
mindestens drei Steifigkeitselementen (102; 202; 302; 402; 502), die untereinander verbunden sind,
wobei die sechs Massenelemente (101; 201; 301; 401; 501) mindestens sechs jeweilige Ankerelemente (103; 203; 303; 403; 503) aufweisen,
wobei jedes der mindestens sechs Ankerelemente (103; 203; 303; 403; 503) zum mechanischen Verbinden jedes der Massenelemente (101; 201; 301; 401; 501) mit jeweiligen Teilen von zwei der Steifigkeitselemente (102; 202; 302; 402; 502) konfiguriert ist;
**dadurch gekennzeichnet, dass** die Massenelemente (101; 201; 301; 401; 501) jeweilige Kanäle (104; 504) für den Durchgang der Steifigkeitselemente (102; 202; 302; 402; 502) darin aufweisen, und wobei die Ankerelemente (103; 203; 303; 403; 503) einen Teil der Kanäle (104; 504) besetzen.

2. Schwingungsisolierende Moduleinrichtung nach Anspruch 1, bei der sich jedes der Steifigkeitselemente (102; 202; 302; 402; 502) entlang einer jeweiligen im Wesentlichen ringförmigen geschlossenen Bahn ausbildet, wobei jedes der Steifigkeitselemente (102; 202; 302; 402; 502) mit vier der Massenelemente (101; 201; 301; 401; 501) mittels der Ankerelemente (103; 203; 303; 403; 503) mechanisch verbunden sind.

3. Schwingungsisolierende Moduleinrichtung nach Anspruch 1 oder 2, bei der die Steifigkeitselemente (102; 202; 302; 402; 502) auf drei jeweiligen Ebenen liegen, die orthogonal zueinander sind.

4. Schwingungsisolierende Moduleinrichtung nach einem der Ansprüche 1 bis 3, bei der die Steifigkeitselemente (102; 202; 302; 402; 502) untereinander verbunden sind, um eine Käfigstruktur zu bilden.

5. Schwingungsisolierende Moduleinrichtung nach Anspruch 1, bei der in der Moduleinrichtung (100; 200; 300; 400; 500) die Masse der Massenelemente (101; 201; 301; 401; 501) maximiert ist und die Steifigkeit der Steifigkeitselemente (102; 202; 302; 402; 502) minimiert ist.

6. Schwingungsisolierende Moduleinrichtung nach Anspruch 1 oder 5, bei der die Ankerelemente (103; 203; 303; 403; 503) in zentrale Positionen der jeweiligen Kanäle (104, 504) gelegt sind.

7. Schwingungsisolierende Moduleinrichtung nach einem der Ansprüche 1 bis 6, bei der die Massenelemente (101; 201; 301; 401; 501) eine im Wesentlichen kubische oder parallelepipedische Struktur (100; 200; 300; 400; 500) bilden.

8. Schwingungsisolierende Moduleinrichtung nach einem der Ansprüche 1 bis 7, bei der die Massenelemente (101; 201; 301; 401; 501) eine Form haben, die im Wesentlichen pyramidisch oder im Wesentlichen pyramidenstumpfförmig oder im Wesentlichen konisch oder im wesentlichen kegelstumpfförmig ist, wobei die Massenelemente (101; 201; 301; 401; 501) vorzugsweise einander ähnlich sind.

9. Schwingungsisolierende Moduleinrichtung nach einem der Ansprüche 1 bis 8, bei der die Massenelemente (101; 201; 301; 401; 501), die Steifigkeitselemente (102; 202; 302; 402; 502) und die Ankerelemente (103; 203; 303; 403; 503) gemäß drei Symmetrieebenen in der Moduleinrichtung gelegt sind.

10. Schwingungsisolierende Moduleinrichtung nach einem der Ansprüche 1 bis 9, bei der die Ankerelemente (103; 203; 303; 403; 503) hauptsächlich für Biegebelastung und vorzugsweise auch für Torsionsbelastung konfiguriert sind, wobei die Steifigkeitselemente (102; 202; 302; 402; 502) unter der Wirkung der Massenelemente (101; 201; 301; 401; 501) sind.

11. Schwingungsisolierende Moduleinrichtung nach einem der Ansprüche 1 bis 10, bei der die Moduleinrichtung (100; 200; 300; 400; 500) zur Isolierung von mechanischen Schwingungen im Bereich von 0 Hz bis 1000 Hz oder zur Isolierung von akustischen Schwingungen im Bereich von 10 Hz bis 4000 Hz konfiguriert ist.

12. Schwingungsisolierende Moduleinrichtung nach einem der Ansprüche 1 bis 11, bei der die sechs Massenelemente (101; 201; 301; 401; 501) nebeneinander und nahe beieinander sind und bei der zumindest teilweise Werkstoff-Diskontinuität zwischen jeweiligen Massenelementen (101; 201; 301; 401; 501), die zueinander benachbart sind, besteht.

13. Schwingungsisolierende Moduleinrichtung nach einem der Ansprüche 1 bis 12, bei der jedes der mindestens sechs Ankerelemente (103; 203; 303; 403; 503) aus einem festen, in einem Stück oder in zwei Stücken gemachten Gelenk (103a, 103b) zwischen einem der mindestens drei Steifigkeitselemente (102; 202; 302; 402; 502) und einem der sechs Massenelemente (101; 201; 301; 401; 501) besteht, wobei strukturelle Kontinuität von jedem der mindestens drei Steifigkeitselemente (102; 202; 302; 402; 502) durch das feste Gelenk (103a, 103b) sichergestellt ist.

14. Schwingungsisolierende periodische Struktur (600), die eine Vielzahl von schwingungsisolierenden Moduleinrichtungen aufweist, die fortlaufend nebeneinander an ihrer äußeren Schnittstelle angeordnet sind, um eine dreidimensionale Struktur zu bilden, **dadurch gekennzeichnet, dass** mindestens eine schwingungsisolierende Moduleinrichtung (100; 200; 300; 400; 500) gemäß einem der Ansprüche 1 bis 13 ausgebildet ist.

## Revendications

1. Dispositif modulaire d'isolation vis-à-vis des vibrations (100 ; 200 ; 300 ; 400 ; 500) comprenant :
six éléments de masse (101 ; 201 ; 301 ; 401 ; 501) respectivement adjacents et non directement reliés les uns aux autres ;
au moins trois éléments de rigidité (102 ; 202 ; 302 ; 402 ; 502) interconnectés les uns aux autres ;
lesdits six éléments de masse (101 ; 201 ; 301 ; 401 ; 501) comprenant au moins six éléments d'ancrage (103 ; 203 ; 303 ; 403 ; 503),
chacun desdits au moins six éléments d'ancrage (103 ; 203 ; 303; 403 ; 503) étant configuré pour connecter mécaniquement chacun desdits éléments de masse (101 ; 201 ; 301 ; 401 ; 501) avec des parties respectives de deux desdits éléments de rigidité (102 ; 202 ; 302 ; 402 ; 502) ;
**caractérisé en ce que** lesdits éléments de masse (101 ; 201 ; 301 ; 401 ; 501) comprennent des canaux respectifs (104; 504) pour le passage dans ceux-ci desdits éléments de rigidité (102 ; 202 ; 302 ; 402 ; 502), et lesdits éléments d'ancrage (103 ; 203 ; 303 ; 403 ; 503) occupent une partie desdits canaux (104 ; 504).

2. Dispositif modulaire d'isolation vis-à-vis des vibrations selon la revendication 1, dans lequel chacun desdits éléments de rigidité (102; 202 ; 302 ; 402 ; 502) se développe selon une trajectoire respective fermée et sensiblement annulaire, chacun desdits éléments de rigidité (102 ; 202 ; 302 ; 402 ; 502) étant relié mécaniquement à quatre desdits éléments de masse (101 ; 201 ; 301 ; 401 ; 501) par lesdits éléments d'ancrage (103 ; 203 ; 303 ; 403 ; 503).

3. Dispositif modulaire d'isolation vis-à-vis des vibrations selon la revendication 1 ou 2, dans lequel lesdits éléments de rigidité (102 ; 202 ; 302 ; 402 ; 502) sont placés sur trois plans respectifs orthogonaux les uns aux autres.

4. Dispositif modulaire d'isolation vis-à-vis des vibrations selon l'une quelconque des revendications 1 à 3, dans lequel lesdits éléments de rigidité (102 ; 202 ; 302 ; 402 ; 502) sont interconnectés entre eux de manière à définir une structure en cage.

5. Dispositif modulaire d'isolation vis-à-vis des vibrations selon la revendication 1, dans lequel la masse desdits éléments de masse (101 ; 201 ; 301 ; 401 ; 501) est maximisée et la rigidité desdits éléments de rigidité (102 ; 202 ; 302 ; 402 ; 502) est minimisée dans ledit dispositif modulaire (100 ; 200 ; 300 ; 400 ; 500).

6. Dispositif modulaire d'isolation vis-à-vis des vibrations selon la revendication 1 ou 5, dans lequel lesdits éléments d'ancrage (103 ; 203 ; 303 ; 403 ; 503) sont placés dans des positions centrales desdits canaux respectifs (104, 504).

7. Dispositif modulaire d'isolation vis-à-vis des vibrations selon l'une quelconque des revendications 1 à 6, dans lequel lesdits éléments de masse (101 ; 201 ; 301 ; 401 ; 501) définissent une structure sensiblement cubique ou parallélépipédique (100; 200 ; 300 ; 400 ; 500).

8. Dispositif modulaire d'isolation vis-à-vis des vibrations selon l'une quelconque des revendications 1 à 7, dans lequel lesdits éléments de masse (101 ; 201 ; 301 ; 401 ; 501) ont une forme sensiblement pyramidale ou sensiblement pyramidale tronquée ou sensiblement conique ou sensiblement tronconique, de préférence lesdits éléments de masse (101 ; 201 ; 301 ; 401 ; 501) étant similaires.

9. Dispositif modulaire d'isolation vis-à-vis des vibrations selon l'une quelconque des revendications 1 à 8, dans lequel lesdits éléments de masse (101 ; 201 ; 301 ; 401 ; 501), lesdits éléments de rigidité (102 ; 202 ; 302 ; 402 ; 502) et lesdits éléments d'ancrage (103 ; 203 ; 303 ; 403 ; 503) sont disposés selon trois plans de symétrie au sein dudit dispositif modulaire.

10. Dispositif modulaire d'isolation vis-à-vis des vibrations selon l'une quelconque des revendications 1 à 9, dans lequel lesdits éléments d'ancrage (103 ; 203 ; 303 ; 403 ; 503) sont configurés pour solliciter principalement en flexion, et de préférence également en torsion, lesdits éléments de rigidité (102 ; 202 ; 302 ; 402 ; 502) sous l'action desdits éléments de masse (101 ; 201 ; 301 ; 401 ; 501).

11. Dispositif modulaire d'isolation vis-à-vis des vibrations selon l'une quelconque des revendications 1 à 10, ledit dispositif modulaire (100 ; 200 ; 300 ; 400 ; 500) étant configuré pour l'isolation vis-à-vis de vibrations mécaniques dans la gamme allant de 0 Hz à 1 000 Hz, ou pour l'isolation vis-à-vis de vibrations acoustiques dans la gamme allant de 10 Hz à 4 000 Hz.

12. Dispositif modulaire d'isolation vis-à-vis des vibrations selon l'une quelconque des revendications 1 à 11, dans lequel lesdits six éléments de masse (101 ; 201 ; 301 ; 401 ; 501) sont juxtaposés et proches les uns des autres, et il existe une discontinuité de matériau au moins partielle entre les éléments de masse respectifs (101 ; 201 ; 301 ; 401 ; 501) adjacents les uns aux autres.

13. Dispositif modulaire d'isolation vis-à-vis des vibrations selon l'une quelconque des revendications 1 à 12, dans lequel chacun desdits au moins six éléments d'ancrage (103 ; 203 ; 303 ; 403 ; 503) consiste en un joint fixe (103a, 103b) réalisé en une seule pièce ou en deux pièces, entre l'un desdits au moins trois éléments de rigidité (102 ; 202 ; 302 ; 402 ; 502) et l'un desdits six éléments de masse (101 ; 201 ; 301 ; 401 ; 501), la continuité structurelle de chacun desdits au moins trois éléments de rigidité (102 ; 202 ; 302 ; 402 ; 502) étant assurée par ledit joint fixe (103a, 103b).

14. Structure périodique d'isolation vis-à-vis des vibrations (600), comprenant une pluralité de dispositifs modulaires d'isolation vis-à-vis de vibrations juxtaposés de manière contiguë les uns aux autres au niveau de leur interface externe, de manière à définir une structure tridimensionnelle, **caractérisée en ce qu'**au moins un dispositif modulaire d'isolation vis-à-vis des vibrations (100 ; 200 ; 300 ; 400 ; 500) est selon l'une quelconque des revendications 1 à 13.
